(19) Europäisches Patentamt
European Patent Office
Office européen des brevets

(11) **EP 3 374 077 B1**

(12) **EUROPÄISCHE PATENTSCHRIFT**

(45) Veröffentlichungstag und Bekanntmachung des Hinweises auf die Patenterteilung:
**12.07.2023   Patentblatt 2023/28**

(21) Anmeldenummer: **16797773.5**

(22) Anmeldetag: **03.11.2016**

(51) Internationale Patentklassifikation (IPC):
**B01J 19/00** *(2006.01)*     **B01J 19/24** *(2006.01)*

(52) Gemeinsame Patentklassifikation (CPC):
**B01J 19/2465; B01J 19/0013; B01J 19/2415;**
**B01J 19/242;** B01J 2219/00063; B01J 2219/00081;
B01J 2219/00083; B01J 2219/002;
B01J 2219/00211; B01J 2219/00213;
B01J 2219/00231; B01J 2219/0024;
B01J 2219/0077

(86) Internationale Anmeldenummer:
**PCT/EP2016/076570**

(87) Internationale Veröffentlichungsnummer:
**WO 2017/080909 (18.05.2017 Gazette 2017/20)**

(54) **VORRICHTUNG ZUR DURCHFÜHRUNG EINER CHEMISCHEN REAKTION IN EINEM KONTINUIERLICHEN VERFAHREN**

DEVICE FOR CARRYING OUT A CHEMICAL REACTION IN A CONTINUOUS METHOD

DISPOSITIF DE MISE EN OEUVRE D'UNE RÉACTION CHIMIQUE DANS UN PROCÉDÉ CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2015   EP 15194070**

(43) Veröffentlichungstag der Anmeldung:
**19.09.2018   Patentblatt 2018/38**

(73) Patentinhaber:
• **Fluitec Invest AG**
**8413 Neftenbach (CH)**
• **Rudolf GmbH**
**82538 Geretsried (DE)**

(72) Erfinder:
• **ANDREOLI, Silvano**
**8413 Neftenbach (CH)**
• **VÖGELI, Tobias**
**8400 Winterthur (CH)**

• **ALTENBURGER, Daniel**
**8461 Oerlingen (CH)**
• **GEORG, Alain**
**8442 Hettlingen (CH)**
• **SCHACHT, Michael**
**82547 Eurasburg (DE)**
• **DUSCHEK, Gunther**
**83671 Benediktbeuern (DE)**

(74) Vertreter: **Clerc, Natalia**
**Isler & Pedrazzini AG**
**Giesshübelstrasse 45**
**Postfach 1772**
**8027 Zürich (CH)**

(56) Entgegenhaltungen:
EP-A1- 2 596 860          EP-A2- 0 307 238
WO-A1-89/04822          WO-A1-2013/132042
DE-A1- 10 110 847        GB-A- 2 184 736
US-A- 3 035 040          US-A- 5 484 882
US-A1- 2004 249 112

**Beschreibung**

TECHNISCHES GEBIET

Die vorliegende Erfindung betrifft eine Vorrichtung zur Durchführung einer chemischen Reaktion in einem kontinuierlichen Verfahren, ein entsprechendes Verfahren sowie eine Verwendung einer derartigen Vorrichtung.

STAND DER TECHNIK

Ein chemischer Reaktor ist derjenige Teil einer Anlage, in welchem chemische Prozesse ablaufen und chemische Umsetzungen durchgeführt werden. Solche Reaktoren werden üblicherweise in Batch-Prozessen oder kontinuierlich betrieben. Es sind auch Semibatch-Prozesse bekannt.

Im Batch-Prozess wird eine Materialmenge als Ganzes dem Reaktor zugeführt und ihm nach Abschluss des Produktionsprozesses als Ganzes wieder entnommen. Das Produkt verbleibt somit so lange im Reaktor, bis die Reaktion vollständig abgelaufen ist und der nächste Produktionsschritt vollzogen werden kann.

Von einer halbkontinuierlichen Betriebsweise bzw. Teilfliessbetrieb (engl.: semi-batch process) spricht man, wenn man einen Reaktionspartner im Reaktor vorlegt und während der Reaktionsdauer weitere Komponenten zu- oder abführt. Beim halbkontinuierlichen Betrieb wird der Reaktor bezüglich eines Teils der Komponenten kontinuierlich und bezüglich bestimmter Komponenten diskontinuierlich betrieben.

Die kontinuierliche Betriebsweise bietet im Vergleich zum Batch-Prozess verschiedene entscheidende Vorteile wie erhöhte Sicherheit und konstantere Produktqualität. Die kontinuierliche Betriebsweise ist von wirtschaftlichem Vorteil, da Reaktorstillzeiten infolge von Befüllungs- und Entleerungsprozessen, wie sie bei Batch- und Semibatch-Verfahren auftreten, überflüssig werden. Zudem können lange Reaktionszeiten infolge sicherheitstechnischer Vorgaben oder zusätzlicher reaktorspezifischer Wärmeaustauschleistungen wie ständige Aufheiz- und Abkühlungsprozesse vermieden werden.

Die Veröffentlichung "Umwandlung diskontinuierlicher chemischer Prozesse in eine kontinuierliche Prozessführung unter Verwendung mikrostrukturierter Reaktoren - Reaktionstechnik und Sicherheit", Chem. Ing. Tech. 2009, 81, No. 1-2 von Peter Hugo und Fenando Lopez zeigt Wege zur Umwandlung von Batch-Prozessen in eine kontinuierliche Betriebsweise auf.

Für die Umwandlung eines diskontinuierlichen Batch-Prozesses lässt sich die reaktionstechnische Analogie zwischen dem diskontinuierlichen Batch-Reaktor (BR) und dem kontinuierlichen Rohrreaktor mit Plug-Flow Eigenschaften (PFTR) benutzen. Im isothermen Fall liefern beide Reaktoren den gleichen Umsatz und die gleiche Selektivität, wenn die Damköhler-Zahlen beider Reaktoren gleich sind. Dabei muss bei gleichen Anfangswerten der Konzentrationen die Reaktionsdauer für beide Prozesse gleich sein.

Kontinuierliche Rohrreaktoren mit Plug-Flow Eigenschaften sind einerseits Leerrohre mit Strömungen, welche je nach Nennweite und Viskosität eine Reynolds-Zahl von mindestens 2'400 bis mindestens 20'000 aufweisen. Andererseits besitzen statische Mischer oder Mischer-Wärmetauscher, wie sie in EP 1'067'352, WO2008/141472, EP 2'796'195 und EP 2'286'904 beschrieben sind, in allen Strömungsbereichen Plug-Flow-Eigenschaften.

Man kann sich eine Plug-Flow-Strömung als eine Wanderung einer sehr langen Reihe von sehr dünnen Scheibchen der Reaktionsmasse durch den Reaktor vorstellen. Diese Scheibchen haben keinen Stoff oder Wärmeaustausch untereinander. Innerhalb des Scheibchens sind alle Konzentrationen und die Temperatur gleich, daher ist eine gute und schnelle radiale Durchmischung von grosser Bedeutung. Es kann von Plug-Flow-Eigenschaften gesprochen werden, wenn eine vorzugsweise im Wesentlichen homogene, besonders bevorzugte homogene bzw. ausreichende radiale Durchmischung vorherrscht und im Reaktor eine Bodenstein-Zahl > 100 erreicht wird. Insbesondere wird unter der radialen Durchmischung eine radiale Durchmischung von chemischen Komponenten innerhalb der Reaktionsmasse angesehen.

Die Bodenstein-Zahl wird üblicherweise mit dem 1-d Dispersionsmodell beschrieben. Diese Modellvorstellung nimmt den 1-dimensionalen Vorgang in einem Strömungsrohr (Pfropfenströmung) als Ansatzpunkt. In Hauptströmungsrichtung z erfolgt eine Strömungsgeschwindigkeit $u_z$, die bei dem jeweiligen Mischerquerschnitt A praktisch konstant ist. Durch molekulare Diffusion, turbulente Konvektion und durch das durch Randreibung (Rauheit) bewirkte parabolische Geschwindigkeitsprofil (z.B. laminare Rohrströmung) wird es zu Abweichungen von der idealen Rohrströmung kommen. Als Grösse zur Erfassung dieser Effekte wird der axiale Dispersionskoeffizient $D_{ax}$ verwendet, der somit ein Mass für die Rückvermischung ist. Die Ansatzgleichung für das 1-d Dispersionsmodell lautet:

$$\frac{\partial c}{\partial t} = -u_z \cdot \frac{\partial c}{\partial z} + D_{ax} \cdot \frac{\partial^2 c}{\partial z^2} \qquad (1)$$

und wird, um eine Lösung zu erleichtern, in dimensionsloser Form angeschrieben. Für den stationären Fall entsteht dann:

$$\frac{\partial\left(\frac{c}{c_0}\right)}{\partial\left(\frac{t}{\tau}\right)} = -\frac{\partial\left(\frac{c}{c_0}\right)}{\partial\left(\frac{z}{L}\right)} + \left(\frac{D_{ax}}{u_z \cdot L}\right) \cdot \frac{\partial^2\left(\frac{c}{c_0}\right)}{\partial\left(\frac{z}{L}\right)^2} = 0 \qquad (2)$$

Darin ist eine dimensionslose Kenngröße enthalten, nämlich die so genannte Bodenstein-Zahl,

$$Bo = \frac{u_z \cdot L}{D_{ax}} \qquad (3)$$

die mit einer "charakteristischen Länge" L des Mischer-Wärmetauscher-Gehäuses definiert ist. Die exakte Lösung der stationären und dimensionslosen Gleichung lautet (nach Levenspiel und Smith):

$$c_i\{\theta, Bo\} = h(\theta) = \sqrt{\frac{Bo}{4 \cdot \pi \cdot \theta}} \cdot e^{\left[-\frac{(1-\theta)^2 \cdot Bo}{4 \cdot \theta}\right]} \qquad (4)$$

Als Grenzfälle des Dispersionsmodells ergeben sich das Verdrängungs-Modell ohne axiale Dispersion für Bo = ∞ (ideale Rohrströmung, Plug-Flow Eigenschaften) und das Rückvermischungsmodell mit axialer Dispersion für Bo = 0 (idealer Rührkessel, Schlaufenreaktor mit hohem Kreislaufverhältnis).

Für schnelle exotherme Reaktionen kommen mehrheitlich Semibatch-Verfahren zum Einsatz. Dabei arbeitet der Semibatch-Reaktor im gezündeten Zustand in der Regel dosierungskontrolliert, wobei das Zudosierte jeweils schnell umgesetzt wird. Wegen der geringen momentanen Restkonzentrationen im Reaktor sind solche Reaktoren auch bei stark exothermen Reaktionen sehr sicher, wenn die offiziellen "Technischen Regeln für Anlagensicherheit", TRAS 410, eingehalten werden.

Dabei ist neben der thermischen Stabilität der Edukte auch die thermische Prozesssicherheit von grosser Bedeutung. Eine einfache Vorentscheidung für die Beurteilung der Sicherheit des Normalbetriebes kann bereits aus der Kenntnis der Reaktionswärme $\Delta H_R$ abgeleitet werden. Hieraus kann gemäss Gleichung (5) die adiabatische Temperaturerhöhung $\Delta T_{adiab}$ ermittelt werden. Dabei steigt die Reaktionstemperatur $T$ linear mit dem Umsatz $U_A$ an, wenn eine konstante Reaktionsenthalpie $\Delta H_R$ und eine spezifische Wärmekapazität $c_p$ vorausgesetzt werden:

$$T = T_0 + \frac{-\Delta H_{m,r} \cdot C_{A,0}}{\rho \cdot c_p} \cdot \left(\frac{n_{i,0} - n_i}{n_{i,0}}\right) = T_0 + \frac{\Delta H_R}{m \cdot c_p} \cdot U_A = T_0 + \Delta T_{adiab} \cdot U_A \qquad (5)$$

Bei Kenntnis der adiabatischen Temperaturerhöhung gilt nach der TRAS 410 für die vorgesehene Reaktion folgende Abschätzung:

Beträgt die adiabatische Temperaturerhöhung der im Normalbetrieb ablaufenden Reaktion weniger als 50 K und werden keine thermischen Instabilitäten der Ausgangsstoffe, der Reaktionsmischung oder Produkte in einem Temperaturbereich $(T_0 + \Delta T_{adiab})$ festgestellt, so kann der Normalbetrieb als sicher beurteilt werden. Gleiches gilt, wenn die Wärmetönung etwa beteiligter Zersetzungs- und Nebenreaktionen so gering ist, dass sie auch zusammen mit der Reaktionswärme der gewünschten Reaktion keinen adiabatischen Temperaturanstieg über 50 K verursacht. Dabei muss die technische Anlage gegen mögliche Druckerhöhungen (aus Dampfdruck oder Gasfreisetzung) infolge dieses begrenzten Temperaturanstiegs ausgelegt sein, was i.d.R. bei den üblicherweise für Reaktionen eingesetzten Druckbehältern und angeschlossenen Anlagenteilen der Fall ist. Dieser einfache Ansatz führt somit dazu, dass bei einer Kühlpanne der Temperaturanstieg moderat ist und der Prozess somit sicher ist.

Das kontinuierliche Analogon zu einem Semibatch-Reaktor ist ein in Serie geschalteter Rohrreaktor oder Mischer-Wärmetauscher-Reaktor mit Plug-Flow Eigenschaften und vielen axial angeordneten seitlichen Dosierstellen. Dabei wird das im Semibatch-Reaktor vorgelegte Gemisch als Hauptstrom zugeführt und die sonst partial dosierten Portionen werden kontinuierlich über die seitlichen Dosierstellen zudosiert. Mit dieser kontinuierlichen Anordnung lassen sich exotherme Reaktionen unter Erhalt der Produktequalität gut durchführen. Allerdings ist der Kostenaufwand für die zahlreichen Dosierstellen mit den zahlreichen Dosierpumpen erheblich. Zudem erhöht sich bei einem Einsatz von sehr vielen Dosierpumpen das Risiko von Störungen, was die Sicherheit des Prozesses negativ beeinflussen kann.

Bei Semibatch Prozessen gelten zudem die sehr einfach anzuwendenden offiziellen "Technischen Regeln für Anlagensicherheit", TRAS 410. Für kontinuierliche Prozesse existieren keine gültigen offiziellen technischen Regeln, was viele Betreiber von einer Umstellung auf einen kontinuierlichen Prozess abschreckt. Der eingangs erwähnte Bericht "Umwandlung diskontinuierlicher chemischer Prozesse in eine kontinuierliche Prozessführung unter Verwendung mikrostrukturierter Reaktoren" empfiehlt zwar eine mögliche Vorgehensweise. Leider eignet sich diese Vorgehensweise lediglich für Mikroreaktoren. Für grosstechnische Anlagen ist diese Empfehlung nicht oder nur erschwert anwendbar.

WO 2013/132042 A1 offenbart einen isotherm kontrollierten Kreislaufreaktor mit einer einzigen Temperaturmessung.

US 2004/0249112 A1 offenbart einen Kreislaufreaktor mit dem Strömungsverhalten von fünf in Serie geschalteten CSTR Reaktoren (continuous stirred-tank reactor), d.h. von Rührkesseln.

WO 89/04822 A1beschreibt einen kontinuierlichen Reaktor mit statischen Mischern. Die statischen Mischer werden verwendet, um das Nitrosil kaskadiert zu dosieren und zu mischen, wobei das Nitrosil am Anfang, in der Mitte und am Ende zugegeben wird. Zusätzlich gewährleisten mehrere Wärmetauscher, dass die Wärme abgeführt wird. Es ist eine Doppelmantel-Konstruktion mit Umlenkungen gezeigt, wobei die Konstruktion aus Rohren und zahlreichen Impfstellen für die Zusätze besteht.

EP 2 596 860 A1 zeigt einen mit einem Wärmetauscher versehenen Kreislaufreaktor mit mindestens einen Mischer-Wärmetauscher auf. Der Wärmetauscher besitzt Absperrarmaturen, um den Kreislauf zu unterbrechen.

US 5 483 882 A beschreibt einen PLA-Prozess, der im Wesentlichen isotherm mit grossem Kreislaufverhältnis betrieben wird.

EP 0 307 238 A2 zeigt einen Massen-Polymerisations-Prozess, welcher im Wesentlichen isotherm betrieben wird. Eine erste Temperatur wird im Kreislauf und eine zweite Temperatur wird in der Verweilzeitstrecke gemessen.

In GB 2 184 736 A wird ein Monomer in Anwesenheit eines flüchtigen flüssigen Mediums in einem Polymerisationstank polymerisiert. Es wird hierzu ein gerührter Tank verwendet.

DE 101 10 847 A1 offenbart einen Kontaktrohrbündelreaktor.

DARSTELLUNG DER ERFINDUNG

Es ist deshalb eine Aufgabe der Erfindung, einen kontinuierlichen Verfahrensprozess für exotherme Reaktionen zu schaffen, welcher möglichst flexibel und sicher ist.

Diese Aufgabe lösen eine Vorrichtung mit den Merkmalen des Patentanspruchs 1, ein Verfahren mit den Merkmalen des Patentanspruchs 12 sowie eine Verwendung einer derartigen Vorrichtung mit den Merkmalen des Anspruchs 14.

Die erfindungsgemässe Vorrichtung zur Durchführung einer chemischen Reaktion in einem kontinuierlichen Verfahren weist einen Reaktor mit mindestens zwei Reaktorabschnitten auf, welche eine Strömungsrichtung definieren. Der Reaktor weist entlang der Strömungsrichtung Plug-Flow-Eigenschaften auf. Erfindungsgemäss ist eine Rückführungsleitung vorhanden, um einen Teilstrom an einer ersten Stelle dem Reaktor zu entnehmen und an einer zweiten Stelle, welche sich in Strömungsrichtung oberhalb der ersten Stelle befindet, dem Reaktor wieder zuzuführen. Ferner ist mindestens ein Mittel vorhanden, welches im Reaktor einen Temperaturanstieg über einen vordefinierten Temperaturbereich, insbesondere eine Temperaturänderung von mehr als annähernd 50 K verhindert.

Dieses mindestens eine Mittel umfasst mehrere Temperatursensoren, welche die Temperatur oder Temperaturänderungen im Reaktor messen. Sie sind in Strömungsrichtung hintereinander angeordnet. In bevorzugten Ausführungsformen ist mindestens ein Teil, vorzugsweise sind alle diese Temperatursensoren in einem gemeinsamen Schutzrohr angeordnet.

Vorzugsweise ist eine Auswerteinheit, welche Teil einer Steuerung sein kann, vorhanden, um die Signale der mehreren Temperatursensoren auszuwerten. Dadurch lässt sich entlang der Strömungsrichtung die örtliche Lage bestimmen, an welcher eine Reaktion im Reaktor gezündet hat. Diese Information lässt sich zur Steuerung des Reaktors verwenden. D.h. es lassen sich über eine Steuerung Massnahmen ergreifen, je nachdem, wo die Reaktion gezündet hat. Derartige Massnahmen sind beispielsweise eine Veränderung der Rückführrate und/oder eine Abschaltung der Eduktzuführung und/oder eine Variation der Additivzuführung.

Es ist eine Steuerung vorhanden, welche nach Massgabe des gemessenen Temperatursensorwertes eine Rückführrate der Rückführungsleitung steuert. Dies wird erleichtert, wenn die Rückführungsleitung über ein steuerbares Ventil mit dem Reaktor verbunden ist. Diese Steuerung ist vorzugsweise die im oberen Abschnitt genannte Steuerung.

Vorzugsweise basiert die erfinderische Lösung auf technischen Sicherheitsregeln, noch bevorzugter auf der Technischen Regel gemäss TRAS 410.

Die erfindungsgemässe Vorrichtung stellt eine kontinuierliche Reaktorschaltung dar. Sie weist mindestens zwei Reaktorabschnitte mit Plug-Flow-Eigenschaften und eine partielle Stoffrückführung auf. Durch geeignete Wahl von Einlaufrate, Verweildauer im Reaktorabschnitt und Rückführungsrate und/oder durch entsprechende Temperaturüberwachung im Reaktor kann ein kontinuierlicher Prozess anstelle eines Semibatchprozesses durchgeführt werden, bzw. der Semibatchprozess in einen kontinuierlichen Prozess umgewandelt werden. Dadurch werden die Vorteile eines kontinuierlichen Prozesses genutzt und trotzdem die notwendigen Sicherheitsaspekte berücksichtigt.

Eine derartige Rückführung in den Reaktor könnte auf Kosten der Selektivität und damit der Produktqualität gehen, insbesondere dann, wenn es sich um sehr grosse Rückführraten handelt. Bei grossen Rückführraten könnte sich zudem die Reaktorleistung erheblich verringern und kein vollständiger Umsatz mehr erreicht werden. Vorzugsweise weist der erfindungsgemässe Reaktor somit mindestens einige, bevorzugterweise alle der folgenden Eigenschaften auf:

- der Reaktor ist für einen kontinuierlichen Betrieb geeignet;
- die Selektivität und die Produktqualität im Reaktor sind hoch;
- der Reaktor ist sicher zu betreiben;
- eine Sicherheitsbewertung ist einfach durchzuführen;.
- ein maximaler Umsatz kann bei minimalem Reaktorvolumen erzielt werden und
- die Örtlichkeit, wo die Reaktion zündet, kann überwacht werden.

Überraschenderweise wurde gefunden, dass bei Reaktoren mit Plug-Flow-Eigenschaften und einer partiellen Rückführung bei geringen Rückführraten eine hohe Selektivität und Produktequalität gewährleistet ist. Zudem wurde gefunden, dass ein gezündeter Reaktor, der sich polytrop verhält, sehr gut mit Temperatursensoren überwacht werden kann.

Man spricht von einer polytropen Reaktionsführung, wenn eine Reaktion weder adiabatisch noch isotherm durchgeführt wird, das heisst, dass sich die Temperatur entlang der Reaktorabschnitte verändert resp. messbar unterschiedlich ist. Anhand dieser Änderung kann der Ort des Zündens überwacht werden, was zu einer zusätzlichen Sicherheit in der Reaktionsführung führt. Voraussetzung ist jedoch eine zuverlässige und genaue Temperaturmessung entlang der Reaktorabschnitte mit Plug-Flow-Eigenschaften.

Es ist bekannt, dass die Temperatur, die ein Temperatursensor misst, stets nur dessen eigene Temperatur ist. Das bedeutet, dass ein Temperatursensor ausreichend in das zu messende Produkt eingetaucht sein muss, damit er dessen Temperatur annehmen kann. Ein Thermometer ist dann ausreichend eingetaucht, wenn sich durch zusätzliches Eintauchen in das konstante Temperaturvolumen keine Änderung der angezeigten Temperatur ergibt. Die resultierenden Messfehler hängen grösstenteils von

- der Eintauchtiefe,
- der Konstruktion des Sensors, wie z.B. Isolation, Durchmesser und Länge des Sensors,
- den Produkteigenschaften,
- und der Strömungsgeschwindigkeit des Produktes ab.

Es wurde gefunden, dass wenn der Sensor beispielsweise mittig auf der Längsachse der Reaktorabschnitte in das strömende Produkt eingetaucht wird, es möglich ist, auch bei Strömungsgeschwindigkeiten von 1 mm s$^{-1}$ die Temperatur sehr genau zu messen. Bevorzugt reicht der Sensor in den bzw. die statischen Mischer hinein, so dass sich die Anströmung an der Sensorspitze markant erhöht. Genau diese Anströmung ist mitunter entscheidend für die Temperaturmessung. CFD Berechnungen und Messungen haben gezeigt, dass bei sehr kleinen Strömungen die Eintauchtiefen für Laboranwendungen mindestens das Zehnfache des Sensordurchmessers betragen sollten. Für industrielle Anwendungen mit geringeren Genauigkeitsanforderungen reicht in der Regel eine Eintauchtiefe, welche einem Fünffachen des Sensordurchmessers entspricht, aus.

Eine bevorzugte Ausführungsform für die Temperaturmessung ist ein Schutzrohr mit mehreren innenliegenden Temperatursensoren. Dabei wird der Einbau einer maximalen Anzahl von Sensoren in einem möglichst dünnen und langen Schutzrohr angestrebt.

Beim Auslegen des erfindungsgemässen Reaktors kann es einerseits durch die hohen Temperaturunterschiede und andererseits durch eine zu hohe Rückführrate zu einer verringerten Selektivität und zu einer schlechten Produktqualität kommen. Beide Parameter, der Temperaturverlauf und die Rückführrate d.h der Verdünnungsfaktor, müssen auf die Reaktion abgestimmt werden. Zudem wurde erkannt, dass im Falle einer Kühlpanne (beispielsweise bei Ausfall des Kühlsystems) die Temperaturerhöhung über den ganzen Reaktor < 50 K betragen soll, um die TRAS 410 einfach einhalten zu können. Ein Überschreiten dieser adiabatischen Temperaturerhöhung entsteht, wenn die Rückführrate bzw. der Verdünnungsfaktor y nach der Gleichung (6) zu gering ist. Das Produkt aus dem Eintrittsstrom (Summe der Additivströme) und dem Verdünnungsfaktor y ergibt somit den Rückführstrom zwischen Reaktoreinlauf P1 und Rückführungsausgang P2 mit dem der Reaktor sicher betrieben werden kann.

$$y = \frac{\Delta T_{adiab} \cdot U_A}{50K} - 1 \qquad (6)$$

Dieses bestechend einfache erfindungsgemässe Vorgehen erlaubt eine sehr sichere Kontrolle des gezündeten Reaktors. Abschliessend ist darauf zu achten, dass in den Reaktorabschnitten mit Plug-Flow Eigenschaften zwischen dem Rückführungsausgang und dem Reaktorauslauf die adiabatische Temperaturerhöhung kleiner als eine vorbestimmte Temperatur, insbesondere kleiner als 50 K sein sollte.

Der gesamte Reaktor kann somit auch bei einer Kühlpanne sicher betrieben werden. Es ist sogar möglich die adiabatische Temperaturerhöhung geringfügig höher als 50 K zu wählen. Voraussetzung ist jedoch, wenn man vom Reaktionssystem über ausreichende Informationen verfügt, wieviel Wärme bei einer Kühlpanne in die Temperierflüssigkeit fliesst. Diese instationären Berechnungen erweisen sich allerding als schwierig. Es ist jedoch möglich, über Versuche diese Werte zu bestimmen. Voraussetzung ist allerdings eine exakte Temperaturmessung über den gesamten Reaktor.

Vorzugsweise ist mindestens ein Reaktorabschnitt ein Mischer-Wärmetauscher. Vorzugsweise sind annähernd alle oder absolut alle Reaktorabschnitte statische Mischer oder Mischer-Wärmetaucher. Je nach Ausführungsform können ein Teil der Mischer-Wärmetauscher bzw. die Mischer oder alle davon gekühlt und/oder beheizt sein.

Vorzugseise führt die Rückführungsleitung von einem in Strömungsrichtung ersten oder zweiten Reaktorabschnitt zurück. Vorzugsweise führt sie zum Reaktoreinlauf zurück.

Vorzugsweise führt die Rückführungsleitung an einer Stelle des Reaktors weg, an welcher ein Reaktionsfluid, insbesondere eine Reaktionsflüssigkeit, einen Umsatz von mindestens 30% aufweist, vorzugsweise von mindestens 60% und noch bevorzugter von mindestens 80%, und wobei das Reaktionsfluid an einem Reaktorauslauf einen Umsatz von grösser als 80%, vorzugsweise grösser als 95% und noch bevorzugter grösser als 99% aufweist. Das Reaktionsfluid wird in diesem Text auch Materialstrom genannt.

Vorzugsweise weisen der Reaktoreinlauf, der Reaktorauslauf und die Rückführungsleitung eine Bodensteinzahl von grösser als 20 pro Meter auf.

Vorzugsweise weist auch die Rückführleitung Plug-Flow-Eigenschaften auf. Die Plug-Flow-Eigenschaft des Reaktors besteht über die gesamte Länge. Die Plug-Flow-Eigenschaft der Rückführleitung besteht gegebenenfalls vorzugsweise über die gesamte Länge.

Die Rückführleitung ist vorzugsweise als Förderorgan ausgebildet oder sie weist vorzugsweise entsprechende Förderelemente auf.

Die Rückführrate bzw. der Verdünnungsfaktor lassen sich über die Pumpenkennlinie der Pumpe, insbesondere der Pumpe der Rückführungsleitung, oder mit einem Durchflussmesser steuern.

Im erfindungsgemässen Verfahren zur Durchführung einer chemischen Reaktion in einem kontinuierlichen Prozess wird ein Materialstrom in einem temperierbaren Reaktor in einem Plug-Flow-Strom kontinuierlich in einer Strömungsrichtung geführt, wobei mindestens zeitweise ein Teil des Materialstroms beabstandet zu einem Reaktorauslauf dem Reaktor entnommen und in Strömungsrichtung oberhalb dem Reaktor wieder zugeführt wird, wobei eine Rückführungsrate gewählt wird, welche einen Temperaturanstieg im Reaktor über ein vordefinierte Temperaturänderung, vorzugsweise von annähernd 50 K, verhindert.

Erfindungsgemäss werden somit dank der Rückführung, insbesondere der gesteuerten Rückführung, hohe Temperaturspitzen im Reaktor vermieden. Werden mehrere Temperatursensoren verwendet und sind sie vorzugsweise in Strömungsrichtung verteilt angeordnet, lassen sich die örtlichen Lagen von Reaktionszündungen im Reaktor feststellen und die Steuerung des Reaktors entsprechend anpassen. Der Reaktor ist überwacht und dank der Steuerung lassen sich rechtzeitig Massnahmen ergreifen bis hin zur Abschaltung der Eduktzuführung.

In einer alternativen Variante des Verfahrens wird der Reaktor im Normalbetrieb als reiner Plug-Flow-Reaktor betrieben. Die Rückführung wird lediglich im Notfall als sicherheitstechnische Massnahme zugeschaltet. Hierfür kann die Rückführung im Betrieb vollständig unterbrochen werden. Bei einer Kühlpanne oder bei einer Fehlzündung der Reaktion wird die Rückführung aktiviert. Beide Fälle lassen sich durch Temperaturmessung im Reaktor feststellen. Tritt einer der genannten Notfälle ein bzw. wird ein erhöhter Temperaturanstieg festgestellt, so wird die Rückführung von der Steuerung zugeschaltet. Die Zuschaltung erfolgt dabei vorzugsweise über ein Umschalten von Ventilen. Die Ventile sind vorzugsweise totraumfrei. Vorzugsweise wird in diesem Zustand die Edukt-Zuführung unterbrochen. IN einem derartigen Notfall lässt sich somit die Wärme ausreichend und sicher abführen und ein Strömen von nicht abgereichertem Edukt in das Auffangvolumen wird verhindert.

Der erfindungsgemäss Reaktor kann beispielsweise für folgende Reaktionen eingesetzt werden: Hydrosililierung, Veresterungen, Nitrierungen, Diazotierungen, Umlagerungen, Alkylierungen, Halogenierungen, Hydrierungen, Oxidierungen, Polymerisationen wie beispielsweise radikalische, ionische, anionische oder lebende, Polyadditionen, Polykondensationen, Neutralisationen, etc. Er lässt sich auch für Gas-Flüssig-Reaktionen verwenden. Die Gasphase lässt sich beispielsweise hierfür vor der Rückführung separieren und am Eintritt wieder zugeben.

Weitere Ausführungsformen sind in den abhängigen Ansprüchen angegeben.

KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnungen, die lediglich zur Erläuterung dienen und nicht einschränkend auszulegen sind. Die Zeichnungen zeigen

Figur 1     eine schematische Darstellung eines erfindungsgemässen Plug-Flow Reaktors mit unterschiedlichen Reaktorabschnitten gemäss einer ersten Ausführungsform;

Figur 2     eine graphische Darstellung, welche für eine gerechnete chemische Reaktion 1. Ordnung (n = 1, e = 0) die erforderlichen relativen Raumzeiten $\tau_{RR}$ / $\tau_{IR}$ bei Variation des Verdünnungsfaktors y zeigt ($\tau_{RR}$ steht für die mittlere Verweilzeit im Reaktor von P1 nach und P2 im Falle einer Rückführung; $\tau_{IR}$ steht für die mittlere Verweilzeit im Reaktor mit Plug-Flow-Eigenschaften von P1 nach und P3 ohne Rückführung;

Figur 3     eine schematische Darstellung eines erfindungsgemässen Plug-Flow-Reaktors in einer zweiten Ausführungsform mit unterschiedlichen Reaktorabschnitten und auf der Achse verteilten Temperatursensoren und

Figur 4     eine schematische Darstellung eines Reaktorabschnitts eines Reaktors gemäss Figur 3.

BESCHREIBUNG BEVORZUGTER AUSFÜHRUNGSFORMEN

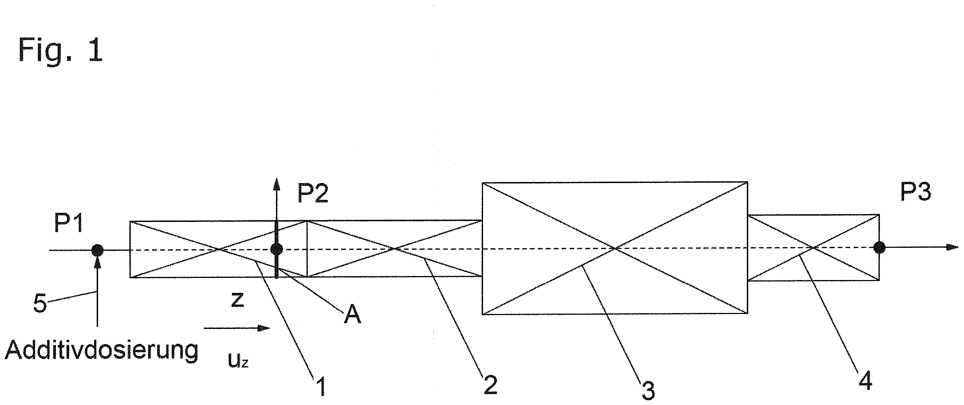

In Figur 1 ist ein erstes Ausführungsbeispiel eines erfindungsgemässen Reaktors dargestellt. Er besteht aus mindestens zwei, vorzugsweise mehreren Reaktorabschnitten 1, 2, 3, 4, wobei mindestens einige der Reaktorabschnitte Mischer-Wärmetauscher sein können. In diesem Beispiel ist mindestens der zweite Reaktorabschnitt 2 ein Mischer-Wärmetauscher. Er weist den Mischerquerschnitt A auf. Die Reaktorabschnitte lassen sich dadurch charakterisieren, dass einerseits in ihnen jeweils andere Prozessbedingungen als in den unmittelbar benachbarten Abschnitten vorherrschen und andererseits dass die Reaktorabschnitte unterschiedliche Geometrien und Querschnitte aufweisen. Beispielsweise ist der erste Reaktorabschnitt ein Einlauf mit Plug-Flow-Eigenschaften, der zweite Reaktorabschnitt 2 ein Mischerwärmetauscher mit grosser Wärmeaustauschfläche, welcher Plug-Flow-Eigenschaften aufweisen kann, der dritte Reaktorabschnitt 3 ein statischer Mischer mit Plug-Flow-Eigenschaften und langer Verweilzeit und der vierte Reaktorabschnitt 4 ein Auslauf mit Plug-Flow-Strömung und/oder mit Plug-Flow-Eigenschaften.

Der Reaktoreinlauf ist in Figur 1 mit P1 bezeichnet, der Reaktorauslauf mit P3. Die Hauptströmungsrichtung ist mit einem Pfeil dargestellt und mit dem Bezugszeichen z versehen. "$u_z$" bezeichnet die Strömungsgeschwindigkeit.

Im Bereich des Reaktoreinlaufes P1 ist vorzugsweise mindestens eine Additivzuführung 5 vorhanden, um dem Materialstrom, insbesondere den Flüssigkeiten und/oder den Gasen, vor oder beim Eintritt in den Reaktor noch Additive zuzuführen.

Der erfindungsgemässe Reaktor weist in mindestens einem Reaktorabschnitt, vorzugsweise im ersten oder in einem in Strömungsrichtung vorderen Reaktorabschnitt 1, eine Rückführungsleitung für eine partielle Stoffrückführung zum Reaktoreinlauf P1 auf. Der entsprechende Rückführungsausgang ist in der Figur 1 mit P2 bezeichnet. Die Rückführung kann unmittelbar zu P1 erfolgen oder über hier nicht dargestellte Zwischenstufen erfolgen. Der rückgeführte Materialstrom bildet einen Verdünnungsstrom. Der Verdünnungsfaktor ist mit y bezeichnet und bestimmt sich anhand des aus dem Reaktor entnommenen und rückgeführten Materialstroms.

Die Reaktorabschnitte 1, 2, 3, 4 weisen Plug-Flow-Eigenschaften auf. Der Reaktoreinlauf P1, die eine Transferleitung bildenden Reaktorabschnitte 1, 2, 3, 4 und der Reaktorauslauf P3 besitzen hohe Bodenstein-Zahlen pro Meter von > 80. Vorzugsweise werden die Verbindungen der einzelnen Reaktorabschnitte gemäss EP 2 796 195 A1 ausgeführt. Dank dieser Eigenschaften besitzt der Reaktor über seine gesamte Länge die gewünschten Plug-Flow-Eigenschaften.

Die Funktionsweise des Reaktors lässt sich somit anhand einer einfachen annähernd idealen Modellvorstellung darlegen. Dieses Modell beruht auf folgenden fünf Eigenschaften:

-     Pfropfenströmung in Strömungsrichtung z im Reaktor über sämtliche Strömungs- und Viskositätsbereiche des Reaktors, d.h. über sämtliche Reaktorabschnitte,
- sofortige axiale Vermischung des Zulaufstroms mit dem Verdünnungsstrom und/oder den Additivströmen,
- Einstellung sehr kurzer Mischzeiten,
- kontrollierter Rückführfaktor bzw. Verdünnungsfaktor y dank kompakter und präziser Durchflussmessung,
- keine reaktionsbedingte Volumenkontraktion.

Beispiel:

Die adiabatische Temperaturerhöhung der schnellen exothermen Reaktion beträgt 250 K bei einem Umsatz $U_A$ von 100%. Es wird eine Reaktion 1. Ordnung angenommen, da in diesem Fall der Umsatz numerisch berechnet werden kann.

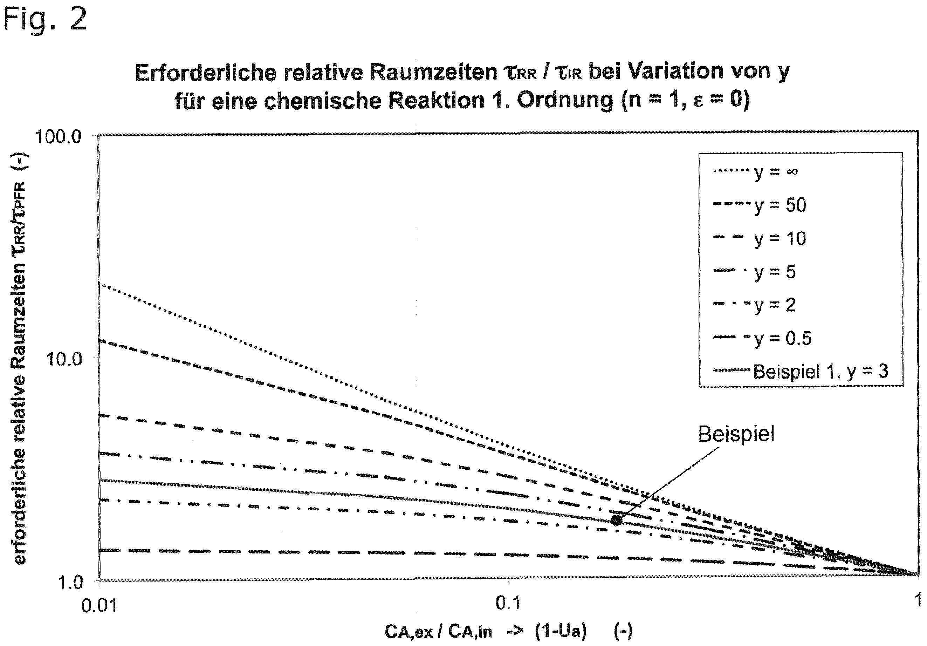

Die Angaben gemäss Figur 2 basieren auf diesen Annahmen und Berechnungen. Anhand der Figur 2 lassen sich die Vorteile des erfindungsgemässen Reaktors gut erkennen.

Der in Figur 1 dargestellte Reaktor ist erfindungsgemäss in Anlehnung an die TRAS410 für Semibatch Prozesse ausgelegt. Der Reaktor arbeitet im gezündeten Zustand. Gemäss TRAS410 darf über den ganzen Reaktor eine maximale adiabatische Temperaturerhöhung von 50 K nicht überschritten werden. Anstelle eines Semibatchprozesses wird jedoch ein kontinuierlicher Prozess verwendet bzw. der Semibatchprozess wird in einen kontinuierlichen Prozess umgewandelt.

Der Reaktor wird in Reaktorabschnitte mit Rückführung P1 nach P2 und in Reaktorabschnitte P2 nach P3 unterteilt.

Im Bereich zwischen Reaktoreinlauf P1 und Rückführungsausgang P2 wird vorzugsweise 80% des Eduktes umgesetzt, was zu einer adiabatischen Temperaturerhöhung von 200 K führt. Mit der Gleichung (7) kann der nötige Verdünnungsfaktor einfach berechnet werden. Der Verdünnungsfaktor y beträgt dabei 3.0, wie unten stehende Berechnung zeigt:

$$y = \frac{\Delta T_{adiab} \cdot U_A}{50K} - 1 = \frac{250K \cdot 0.8}{50K} - 1 = 3.0 \qquad (7)$$

Wird der Reaktor mit einem Verdünnungsfaktor von y = 3 gefahren, kann trotz gezündetem Zustand eine Temperaturerhöhung von 50°C nicht überschritten werden. Zwischen der Rückführung P2 und dem Reaktorauslauf P3 werden die noch verbliebenen restlichen 20% des Eduktes umgesetzt. Dies entspricht einer maximalen adiabatischen Temperaturerhöhung von 50 K in diesen Abschnitten.

Im Falle einer adiabatischen Temperaturerhöhung von 300°C müsste der Verdünnungsfaktor entsprechend angepasst werden. So könnten in diesem Fall die Reaktorabschnitte von P1 nach P2 mit 83.33% Umsatz und einer Rückführrate von y = 4 betrieben werden und die Reaktorabschnitte von P2 nach P3 mit 16.67% betrieben werden.

Diese sehr einfache Sicherheitsbetrachtung nach der TRAS 410 ermöglicht somit den sicheren Betrieb auch für einen kontinuierlichen Prozess. Zudem bleibt die Reaktorleistung sehr hoch. Mit der beispielhaften Verdünnung von y = 3 und einem Umsatz von 80% wird gemäss Figur 2 lediglich das 1.5 fache des Reaktorvolumens eines herkömmlichen Plug-Flow Reaktors ohne Rückführung benötigt. Würde man im Reaktorbereich vom Reaktoreinlauf P1 bis zum Rückführungsausgang P2 höhere Umsätze fahren, so würden erheblich grössere Reaktorvolumina nötig werden. Die Reduktion der Reaktorleistung ist also in unserem Beispiel moderat.

Abschliessend sorgen die Plug-Flow-Eigenschaften zwischen dem Reaktoreinlauf P1 und dem Reaktorauslauf P3 für eine hohe Selektivität und ein qualitativ hochstehendes Produkt. Wird auch die Rückführungsleitung vom Rückführungsausgang P2 zum Reaktoreinlauf P1 mit Plug-Flow-Eigenschaften versehen, so wird je nach Reaktion die Produktqualität zusätzlich verbessert.

Der Reaktor lässt sich somit mit entsprechender Auslegung von Einlaufrate, Verweilzeit zwischen Reaktoreinlauf und Rückführungsausgang und Rückführungsrate einstellen, damit die gesetzte Maximaltemperaturerhöhung von 50°C nicht überschritten wird.

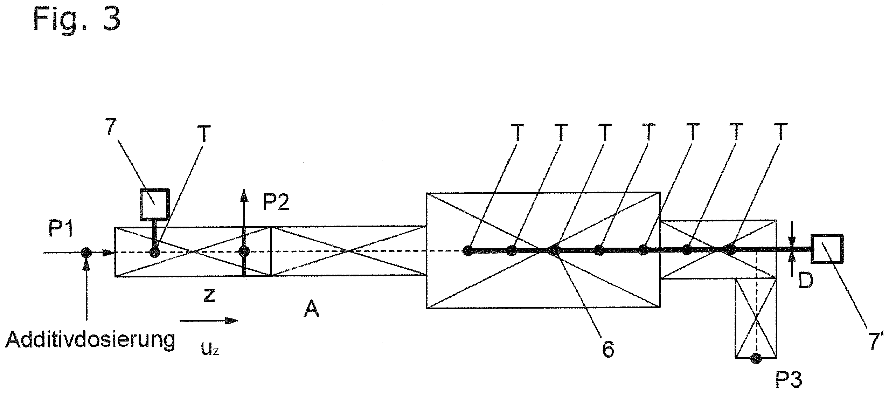

Vorzugsweise ist jedoch mindestens ein erster Temperatursensor vorhanden, welcher im Bereich zwischen Reaktoreinlauf P1 und Rückführungsausgang P2 die Temperatur T im Reaktor misst und einer Steuerung meldet. Dieser mindestens eine erste Temperatursensor 7 ist in Figur 1 nicht dargestellt. Er ist jedoch in Figur 3 erkennbar. Er ist vorzugsweise annähernd mittig in den Querschnitt des entsprechenden Reaktorabschnitts, hier des ersten Reaktorabschnitts 1, eingetaucht. Vorzugsweise ist er über eine Länge von mindestens das Fünffache seines Sensordurchmessers eingetaucht.

Ein Temperatursensor 7, 7' ist dann ausreichend in den Produktraum eingetaucht, wenn sich durch zusätzliches eintauchen in das Produktvolumen keine Änderung der angezeigten Temperatur mehr ergibt. In allen Fällen, wo man Eintauchfehler vermutet, sollte man die Eintauchtiefe um ein oder zwei Sensor-Durchmesser verändern und beobachten, ob die Anzeige konstant bleibt. Die erforderliche Eintauchtiefe erhöht sich bei Temperaturen oberhalb der Raumtemperatur bis zu einem Maximum, das bei etwa 400°C erreicht ist.

Die Steuerung überwacht basierend auf der Temperaturmessung mit mindestens einem Temperatursensor ob und im Falle von mehreren Sensoren auch wo die Reaktion gezündet hat. Zudem kann die Steuerung die Rücklaufrate bzw. den Verdünnungsfaktor y überwachen und regeln. Die Bestimmung des Verdünnungsfaktors y kann dabei über die Durchflussmessung oder über die Kennlinie der Pumpe, hier der Rückführungspumpe erfolgen. Des Weiteren kann die Steuerung beispielsweise zusätzlich die Temperier-Vorrichtung überwachen und im Fall einer Panne kann die Steuerung die Edukt-Dosierungen steuern oder ganz unterbrechen. Die Steuerung der Edukt-Dosierung erfolgt vorzugsweise über die Steuerung einer vorzugsweise vorhandenen Zuführpumpe, welche die Edukte in den Reaktor fördert. Die Steuerung übernimmt vollständig die Aufgabe, die Reaktion sicher zu kontrollieren. Dabei kann die Steuerung bei Bedarf zusätzliche Informationen von ATR- oder NIR-Infrarotsonden verarbeiten, welche in einer Ausführungsform im oder am Reaktor angeordnet sind.

Die Rückführung endet vorzugsweise im Reaktoreinlauf P1. Es ist jedoch auch möglich, die Rückführung in einen vorangehenden Reaktorabschnitt einzuleiten, dies insbesondere dann, wenn der Rückführungsausgang nicht im ersten sondern in einem nachfolgenden Reaktorabschnitt angeordnet ist. Der Rückführungseingang ist in diesem Fall somit nicht der Reaktoreinlass sondern ein separater Einlass. Des Weiteren können auch in Strömungsrichtung hintereinander mehrere Rückführungsausgänge und/oder Rückführungseingänge vorhanden sein.

In Figur 3 ist eine zweite Ausführungsform des erfindungsgemässen Reaktors dargestellt. Hier verläuft stromabwärts nach dem Rückführungsausgang P2 ein Schutzrohr 6 mit mindestens einem zweiten Temperatursensor 7'. Das Schutzrohr 6 weist einen äusseren Durchmesser D auf, welcher um ein Vielfaches kleiner ist als der innere Durchmesser des entsprechenden Reaktorabschnitts. Vorzugsweise sind in Strömungsrichtung hintereinander mehrere zweite Temperatursensoren 7' angeordnet. Diese zweiten Temperatursensoren können in einem gemeinsamen Schutzrohr 6 oder in mehreren nacheinander folgenden Schutzrohren angeordnet sein. Die zweiten Temperatursensoren sind in diesem Beispiel in einem dritten und einem vierten Reaktorabschnitt angeordnet. Sie können jedoch auch in anderen Abschnitten, beispielsweise besonders bevorzugt im ersten Abschnitt, angeordnet sein.

Diese zweiten Temperatursensoren 7' dienen ebenfalls der Überwachung der Temperatur T in den jeweiligen Reaktorabschnitten. Bei Überschreitung von vordefinierten Maximaltemperaturen, z.B. den oben angegebenen 50° C, wird ein entsprechendes Signal an die Steuerung gegeben und die Rücklaufrate bzw. der Verdünnungsfaktor y entsprechend erhöht. Zudem kann der Zulauf der Edukte notfalls unterbrochen werden. Bei Unterschreitung einer Minimaltemperatur, gemessen vom mindestens einen ersten und/oder vom mindestens einen zweiten Temperatursensor 7, 7' lässt sich der Verdünnungsfaktor y mittels der Steuerung auch reduzieren. Die Temperatursensoren sollen vorzugsweise so angeordnet sein, dass der Ort, wo die Reaktion zündet, erfasst und überwacht werden kann.

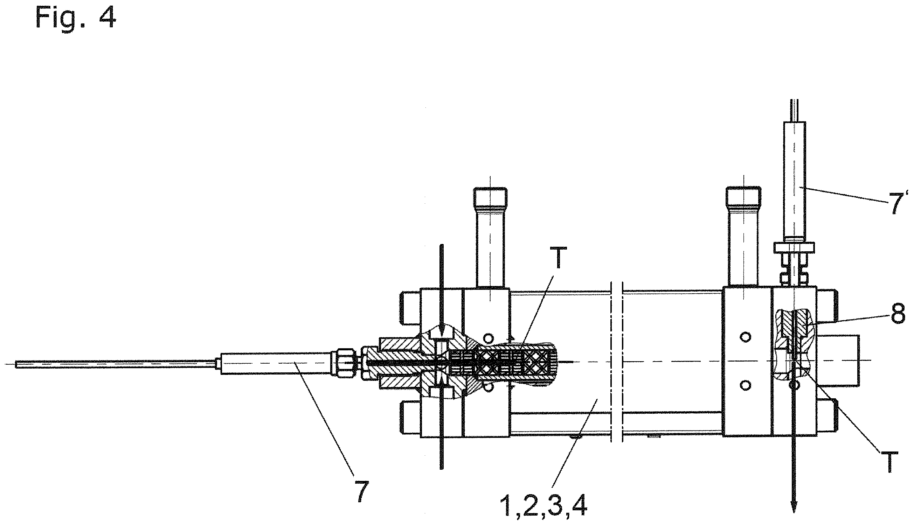

Es lassen sich Sensoren bekannter Art als erste und zweite Temperatursensoren 7, 7' einsetzen. Figur 4 zeigt zwei mögliche Ausführungsformen von Temperatursensoren 7, 7' wie sie in den zwei oben beschriebenen Ausführungsbeispielen gemäss den Figuren 1 und 3 eingesetzt werden können.

In Figur 4 ist ein Sensor 7, 7' axial und ein Sensor 7, 7' radial eingebaut. Beim axial eingebauten Sensor 7, 7' kann die Eintauchtiefe ausreichend eingestellt werden. Beim Einsatz von statischen Mischern oder Mischer-Wärmetauschern als Reaktorabschnitte kann das Mischelement beispielsweise passgenau aufgebohrt werden, um ein ausreichendes Eintauchen im Reaktorabschnitt zu gewährleisten. Dabei kann das Schutzrohr 6 mehrere Temperatursensoren aufweisen. Beispielsweise werden dabei klassische PT100 Sensoren, Thermoelemente oder faseroptische Sensoren eingesetzt. Der Sensor 7, 7' mit dem Schutzrohr 6 kann zusätzlich den Reaktorabschnitt durchdringen. Wird der Sensor 7, 7' radial eingebaut, so kann insbesondere bei kleinen Reaktorabschnitten die erforderliche Eintauchtiefe nicht ausreichen. Dann ist es nötig den Sensor 7, 7' mit einer zusätzlichen Isolation 8 auszurüsten um eine ausreichende Produktmessung zu garantieren. Als Isolation werden beispielweise PTFE, PP, PET, POM und PEEK Kunststoffe eingesetzt. Die Isolation 8 kann mit einem beliebigen Isolator erfolgen.

BEZUGSZEICHENLISTE

1   erster Reaktorabschnitt
2   zweiter Reaktorabschnitt
3   dritter Reaktorabschnitt
4   vierter Reaktorabschnitt
5   Additivzuführung
6   Schutzrohr
7   erster Temperatursensor
7'   zweiter Temperatursensor
8   Isolation

P1 Reaktoreinlauf
P2 Rückführungsausgang
P3 Reaktorauslauf
A Mischerquerschnitt
D Sensordurchmesser
z Hauptströmungsrichtung
y Verdünnungsfaktor
T lokale Reaktionstemperatur

## Patentansprüche

1. Vorrichtung zur Durchführung einer chemischen Reaktion in einem kontinuierlichen Verfahren, wobei die Vorrichtung einen Reaktor mit mindestens zwei Reaktorabschnitten aufweist, welche eine Strömungsrichtung definieren, und wobei der Reaktor entlang der Strömungsrichtung und über seine gesamte Länge Plug-Flow-Eigenschaften aufweist, **dadurch gekennzeichnet, dass** eine Rückführungsleitung vorhanden ist, um einen Teilstrom an einer ersten Stelle dem Reaktor zu entnehmen und an einer zweiten Stelle, welche sich in Strömungsrichtung oberhalb der ersten Stelle befindet, dem Reaktor wieder zuzuführen und wobei mindestens ein Mittel vorhanden ist, welches im Reaktor einen Temperaturanstieg über einen vordefinierten Temperaturbereich, insbesondere eine Temperaturänderung von mehr als annähernd 50 K verhindert, wobei das Mittel mehrere Temperatursensoren umfasst, welche in Strömungsrichtung hintereinander angeordnet sind und welche die Temperatur oder Temperaturänderungen im Reaktor messen, und wobei eine Steuerung vorhanden ist, welche nach Massgabe des gemessenen Temperatursensorwertes eine Rückführrate der Rückführungsleitung steuert.

2. Vorrichtung nach Anspruch 1, wobei mindestens ein Teil der mehreren Temperatursensoren in einem gemeinsamen Schutzrohr angeordnet sind.

3. Vorrichtung nach einem der Ansprüche 1 oder 2, wobei eine Auswerteeinheit vorhanden ist, um entlang der Strömungsrichtung nach Massgabe von Signalen der mehreren Temperatursensoren eine örtliche Lage zu bestimmen, an welcher eine Reaktion innerhalb des Reaktors gezündet hat.

4. Vorrichtung nach einem der Ansprüche 1 bis 3, wobei über die Steuerung Massnahmen ergreifbar sind, wobei die Massnahmen eine Abschaltung der Eduktzuführung und/oder eine Variation der Additivzuführung beinhalten..

5. Vorrichtung nach einem der Ansprüche 1 bis 4, wobei die Rückführungsleitung über eine steuerbare Pumpe mit dem Reaktor verbunden ist.

6. Vorrichtung nach einem der Ansprüche 1 bis 5, wobei mindestens ein Reaktorabschnitt ein Mischer-Wärmetauscher ist.

7. Vorrichtung nach einem der Ansprüche 1 bis 6, wobei die Rückführungsleitung von einem in Strömungsrichtung ersten oder zweiten Reaktorabschnitt zurückführt.

8. Vorrichtung nach einem der Ansprüche 1 bis 7, wobei die Rückführungsleitung zu einem Reaktoreinlauf des Reaktors der Vorrichtung zurückführt.

9. Vorrichtung nach einem der Ansprüche 1 bis 8, wobei die Rückführungsleitung an einer Stelle des Reaktors weg führt, an welcher ein Reaktionsfluid einen Umsatz von mindestens 30% aufweist, vorzugsweise von mindestens 60% und noch bevorzugter von mindestens 80%, und wobei das Reaktionsfluid an einem Reaktorauslauf des Reaktors der Vorrichtung einen Umsatz von grösser als 80%, vorzugsweise grösser als 95% und noch bevorzugter grösser als 99% aufweist.

10. Vorrichtung nach einem der Ansprüche 1 bis 9, umfassend einen Reaktoreinlauf des Reaktors der Vorrichtung und einen Reaktorauslauf des Reaktors der Vorrichtung, wobei der Reaktoreinlauf, der Reaktorauslauf und die Rückführungsleitung eine Bodensteinzahl von grösser als 20 pro Meter aufweisen.

11. Vorrichtung nach einem der Ansprüche 1 bis 10, wobei die Rückführleitung Plug-Flow-Eigenschaften aufweist.

12. Verfahren zur Durchführung einer chemischen Reaktion in einem kontinuierlichen Prozess, in einer Vorrichtung nach einem der Ansprüche 1 bis 11, wobei ein Materialstrom im Reaktor in einem Plug-Flow-Strom kontinuierlich in einer Strömungsrichtung geführt wird, wobei mindestens zeitweise ein Teil des Materialstroms beabstandet zu einem Reaktorauslauf des Reaktors dem Reaktor entnommen und in Strömungsrichtung oberhalb dem Reaktor wieder zugeführt wird, wobei eine Rückführungsrate gewählt wird, welche einen Temperaturanstieg im Reaktor über ein vordefinierte Temperaturänderung, vorzugsweise von annähernd 50 K, verhindert.

13. Verfahren nach Anspruch 12 zur Durchführung einer Hydrosilylierung, Veresterung, Nitrierung, Diazotierung, Neutralisation, Umlagerung, Alkylierung, Halogenierung, Hydrierung, Oxidierung oder Polymerisation, insbesondere radikalische, ionische, anionische oder lebende Polymerisation, Polyaddition oder Polykondensation.

14. Verwendung einer Vorrichtung nach einem der Ansprüche 1 bis 11 zur Durchführung einer chemischen Reaktion, insbesondere einer Hydrosilylierung, Veresterung, Nitrierung, Diazotierung, Neutralisation, Umlagerung, Alkylierung, Halogenierung, Hydrierung, Oxidierung oder Polymerisation, insbesondere radikalische, ionische, anionische oder lebende Polymerisation, Polyaddition oder Polykondensation.

## Claims

1. Device for carrying out a chemical reaction by a continuous method, wherein said device has a reactor with at least two reactor sections which define a direction of flow, and wherein the reactor has plug flow properties along the direction of flow and over the whole length of the reactor, **characterized in that** a recirculation line is provided in order to withdraw a partial flow from the reactor at a first point and return it to the reactor at a second point located above the first point in the direction of flow, and wherein at least one means is provided that prevents a temperature increase in the reactor over a predetermined temperature range, specifically a temperature change of more than approximately 50 K, wherein the means comprises multiple temperature sensors which are arranged in series in the direction of flow and which measure the temperature or temperature changes in the reactor and wherein a control unit is provided that controls a recirculation rate of the recirculation line according to the value measured by the temperature sensor.

2. Device according to Claim 1, wherein at least part of the plurality of temperature sensors are arranged together in a protective tube.

3. Device according to one of Claims 1 or 2, wherein an evaluation unit is provided in order to determine a local position along the direction of flow at which a reaction has been ignited inside the reactor based on signals from the plurality of temperature sensors.

4. Device according to one of Claims 1 through 3, wherein measures can be taken via the control system, whereby the measures include a shutdown of the educt feed and/or a variation of the additive feed.

5. Device according to one of Claim 1 through 4, wherein the recirculation line is connected to the reactor via a controllable pump.

6. Device according to one of Claims 1 through 5, wherein at least one reactor section is a mixer-heat exchanger.

7. Device according to one of Claims 1 through 6, wherein the recirculation line leads back from a first or second reactor section in the direction of the flow.

8. Device according to one of Claims 1 through 7, wherein the recirculation line leads back to a reactor inlet of the reactor of the device.

9. Device according to one of Claims 1 through 8, wherein the recirculation line leads away at a point of the reactor at which the reaction fluid has a turnover of at least 30%, preferably at least 60%, and even more preferably at least 80%, and wherein the reaction fluid at an outlet of the reactor of the device has a turnover of greater than 80%, preferably greater than 95%, and even more preferably greater than 99%.

10. Device according to one of Claims 1 through 9, comprising a reactor inlet of the reactor of the device and a reactor outlet of the reactor of the device, wherein the reactor inlet, the reactor outlet, and the recirculation line have a Bodenstein number of greater than 20 per metre.

**11.** Device according to one of Claims 1 through 10, wherein the recirculation line has plug flow properties.

**12.** Method for carrying out a chemical reaction in a continuous process, in a device according to one of Claims 1 through 11, wherein a material flow in the reactor in a plug flow is continuously fed in a direction of flow, wherein a part of the material flow is at least temporarily withdrawn from the reactor at a distance from a reactor outlet of the reactor and returned in a flow direction above the reactor, and wherein a recirculation rate is selected that prevents a temperature increase in the reactor above a predetermined temperature change, preferably of approximately 50 K.

**13.** Method according to Claim 12 for carrying out hydrosilylation, esterification, nitration, diazotization, neutralization, rearrangement, alkylation, halogenation, hydration, oxidation, or polymerization, particularly radical, ionic, anionic, or living polymerization, polyaddition, or polycondensation.

**14.** Use of a device according to one of Claims 1 through 11 for carrying out a chemical reaction, particularly hydrosilylation, esterification, nitration, diazotization, neutralization, rearrangement, alkylation, halogenation, hydration, oxidation, or polymerization, particularly radical, ionic, anionic, or living polymerization, polyaddition, or polycondensation.

**Revendications**

**1.** Dispositif pour la réalisation d'une réaction chimique dans un procédé en continu, le dispositif présentant un réacteur comportant au moins deux sections de réacteur qui définissent une direction d'écoulement, et le réacteur présentant des caractéristiques d'écoulement-piston le long de la direction d'écoulement et sur sa longueur entière, **caractérisé en ce qu'**une conduite de retour est présente pour prélever un flux partiel du réacteur au niveau d'un premier emplacement et l'alimenter à nouveau au niveau d'un deuxième emplacement qui se trouve en amont du premier emplacement dans la direction d'écoulement, et au moins un moyen est présent qui empêche une élévation de température dans le réacteur au-dessus d'une plage de températures prédéfinie, en particulier un changement de température de plus d'environ 50 K, le moyen comprenant plusieurs capteurs de température qui sont agencés les uns après les autres dans la direction d'écoulement et qui mesurent la température ou les changements de température dans le réacteur, et un dispositif de commande étant présent qui, en fonction de la valeur de capteurs de température mesurée, commande un débit de retour de la conduite de retour.

**2.** Dispositif selon la revendication 1, au moins une partie des plusieurs capteurs de température étant agencés dans un tube protecteur commun.

**3.** Dispositif selon l'une quelconque des revendications 1 ou 2, une unité d'analyse étant présente afin de déterminer une position locale dans la direction d'écoulement, en fonction de signaux des plusieurs capteurs de température, à laquelle une réaction à l'intérieur du réacteur a été déclenchée.

**4.** Dispositif selon l'une quelconque des revendications 1 à 3, des mesures pouvant être prises par le biais du dispositif de commande, les mesures comprenant un arrêt de l'alimentation en éduits et/ou une variation de l'alimentation d'additif.

**5.** Dispositif selon l'une quelconque des revendications 1 à 4, la conduite de retour étant reliée au réacteur par le biais d'une pompe pouvant être commandée.

**6.** Dispositif selon l'une quelconque des revendications 1 à 5, au moins une section de réacteur étant un mélangeur-échangeur de chaleur.

**7.** Dispositif selon l'une quelconque des revendications 1 à 6, la conduite de retour conduisant de retour d'une première ou deuxième section de réacteur dans la direction d'écoulement.

**8.** Dispositif selon l'une quelconque des revendications 1 à 7, la conduite de retour conduisant de retour vers une entrée de réacteur du réacteur du dispositif.

**9.** Dispositif selon l'une quelconque des revendications 1 à 8, la conduite de retour partant d'un emplacement du réacteur où un fluide de réaction présente un taux de conversion d'au moins 30%, de préférence d'au moins 60 % et encore plus préférablement d'au moins 80 %, et le fluide de réaction présentant une conversion, au niveau d'une sortie du réacteur du réacteur du dispositif, supérieure à 80 %, de préférence supérieure à 95 % et encore plus préférablement supérieure à 99 %.

10. Dispositif selon l'une quelconque des revendications 1 à 9, comprenant une entrée de réacteur du réacteur du dispositif et une sortie de réacteur du réacteur du dispositif, l'entrée de réacteur, la sortie de réacteur et la conduite de retour présentant un indice de Bodenstein de plus de 20 par mètre.

11. Dispositif selon l'une quelconque des revendications 1 à 10, la conduite de retour présentant des caractéristiques d'écoulement-piston.

12. Procédé pour la réalisation d'une réaction chimique dans un procédé en continu, dans un dispositif selon l'une quelconque des revendications 1 à 11, un flux de matière dans le réacteur étant conduit dans un flux à écoulement-piston en continu dans une direction d'écoulement, une partie du flux de matière étant au moins temporairement prélevée du réacteur à distance d'une sortie du réacteur et alimentée à nouveau dans le sens d'écoulement en amont du réacteur, un débit de retour étant choisi qui empêche une élévation de température dans le réacteur au-dessus d'un changement de température prédéfini, de préférence d'environ 50 K.

13. Procédé selon la revendication 12 pour la réalisation d'une hydrosilylation, d'une estérification, d'une nitration, d'une diazotation, d'une neutralisation, d'un réarrangement, d'une alkylation, d'une halogénation, d'une hydrogénation, d'une oxydation ou d'une polymérisation, en particulier une polymérisation, polyaddition ou polycondensation radicalaire, ionique, anionique ou vivante.

14. Utilisation d'un dispositif selon l'une quelconque des revendications 1 à 11 pour la réalisation d'une réaction chimique, en particulier d'une hydrosilylation, d'une estérification, d'une nitration, d'une diazotation, d'une neutralisation, d'un réarrangement, d'une alkylation, d'une halogénation, d'une hydrogénation, d'une oxydation ou d'une polymérisation, en particulier une polymérisation, polyaddition ou polycondensation radicalaire, ionique, anionique ou vivante.

Fig. 1

Fig. 2

**Erforderliche relative Raumzeiten $\tau_{RR}$ / $\tau_{IR}$ bei Variation von y für eine chemische Reaktion 1. Ordnung (n = 1, $\varepsilon$ = 0)**

EP 3 374 077 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1067352 A
- WO 2008141472 A
- EP 2796195 A
- EP 2286904 A
- WO 2013132042 A1
- US 20040249112 A1
- WO 8904822 A

- EP 2596860 A1
- US 5483882 A
- EP 0307238 A2
- GB 2184736 A
- DE 10110847 A1
- EP 2796195 A1

**In der Beschreibung aufgeführte Nicht-Patentliteratur**

- **VON PETER HUGO ; FENANDO LOPEZ.** Umwandlung diskontinuierlicher chemischer Prozesse in eine kontinuierliche Prozessführung unter Verwendung mikrostrukturierter Reaktoren - Reaktionstechnik und Sicherheit. *Chem. Ing. Tech.,* 2009, vol. 81 (1-2